# FASCICULE DE BREVET EUROPEEN

(11) **EP 1 972 983 B1**
(45) Date de publication et mention de la délivrance du brevet: **02.12.2009**
(21) Numéro de dépôt: 08003965.4
(22) Date de dépôt: 02.07.2004
(51) Int. Cl.: G02B 21/00, G02B 21/36

(54) **Dispositif d`imagerie à balayage pour microscopie confocale à soustraction d`images**
Bildgebungsvorrichtung für konfokale Mikroskopie mit Bildsubstraktion
Scanning imaging device for confocal microscopy with image substraction

(30) Priorité: 04.07.2003 FR 0308243; 29.07.2003 FR 0309361
(43) Date de publication de la demande: 24.09.2008
(62) Demande divisionnaire de: 04767572.3
(73) Titulaire: Lauer, Vincent, 68200 Mulhouse (FR)
(72) Inventeur: Lauer, Vincent, 68200 Mulhouse (FR)
(74) Mandataire: Henkel, Feiler & Hänzel

(56) Documents cités:
- EP-A- 0 911 667
- WO-A-02/37157
- WO-A-98/28655
- US-B1- 6 426 835
- US-B1- 6 545 265

## Description

Domaine technique : il s'agit d'un système d'imagerie à balayage applicable par exemple en microscopie et proche du microscope confocal.

### Technique antérieure :

Le brevet US 6,144,489 décrit l'extraction de la partie confocale d'une image semi-confocale, obtenue en soustrayant une image non confocale à l'image confocale.

Le brevet US 6,426,835 décrit un cas particulier du premier brevet, précisant les détails du calcul à effectuer. Le brevet US 5,545,265 décrit l'amélioration d'images confocales par soustraction de deux images confocales obtenues à partir de réseaux de trous microscopiques de caractéristiques différentes. Dans ce brevet les deux images peuvent être obtenues à partir de lumière sélectionnée provenant de disques ou d'anneaux dans un plan observé, toutefois les images restent confocales au sens ou la zone éclairée coïncide toujours avec la zone d'où provient la lumière sélectionnée.

Le brevet US 6,687,052 décrit une technique de soustraction de deux image dont l'une est semi-confocale et l'autre est obtenue à partir de la lumière non utilisée pour générer l'image semi-confocale. Dans ce brevet un masque est utilisé pour filtrer la lumière provenant de l'objet observé. Ce masque comprend des parties transparentes et des parties réfléchissantes. La lumière transmise par le masque est utilisée pour générer une première image. La lumière réfléchie en sens opposé par le masque est utilisée pour générer une seconde image.

### Description de l'invention.

L'invention a pour objectif d'améliorer la qualité et la luminosité des images confocales ou semi-confocales, et en particulier des images obtenues en fluorescence.

A cet effet l'invention consiste en un dispositif d'imagerie comprenant :
a) un moyen pour éclairer au moins un point d'éclairage sur une zone observée à l'aide d'un faisceau lumineux d'éclairage,
b) un moyen pour sélectionner la lumière provenant dudit point d'éclairage,
c) un moyen pour former une image dudit point d'éclairage à partir de la lumière sélectionnée provenant dudit point d'éclairage,
d) un système de balayage pour déplacer ledit point d'éclairage sur la zone observée et pour déplacer simultanément l'image dudit point d'éclairage, pour balayer une zone observée et former une première image de la zone observée,
e) un capteur détectant la première image,
   caractérisé par les faits suivants :
f) il comprend un moyen pour sélectionner la lumière provenant d'une bande entourant ledit point d'éclairage,
g) il comprend un moyen pour former une image de ladite bande à partir de la lumière sélectionnée provenant de ladite bande,
h) le système de balayage est disposé pour déplacer simultanément ledit point d'éclairage et l'image de ladite bande, pour former une deuxième image de la zone observée à partir de la lumière sélectionnée provenant de ladite bande,
i) il comprend un capteur détectant la deuxième image,
j) il comprend un moyen pour combiner les première et deuxième images de la zone observée en une troisième image de la zone observée.

De préférence, lesdites bandes sont des anneaux concentriques auxdits points d'éclairage. Toutefois les bandes peuvent avoir tout type de formes, par exemple carrées ou hexagonales sans que le principe de l'invention soit remis en cause.

Le dispositif diffère de l'art antérieur (US 5,545,265) par le fait que la deuxième image est formée à partir de la lumière provenant d'un anneau (ou d'une bande) entourant le point d'éclairage. Dans le brevet US 5,545,265 :
- soit l'éclairage est focalisé sur un point et la lumière provenant du point d'éclairage est sélectionnée pour former l'image, la première et la deuxième image différant entre elles par la taille du point d'éclairage,
- soit la lumière provenant d'un anneau est sélectionnée pour former la deuxième image, mais dans ce cas l'éclairage est également modifié entre la première et la deuxième image, de sorte lors de l'acquisition de la deuxième image un anneau est éclairé, cet anneau coïncidant avec celui dont provient la lumière sélectionnée pour former la deuxième image.

Selon l'invention, l'image est donc obtenue en supprimant la lumière provenant de la zone d'éclairage (car elle est bloquée par le centre de l'anneau) au lieu de la sélectionner. De ce fait, lorsque un objet est dans le plan observé, la première image est de luminosité élevée et la deuxième image est de luminosité nulle. Donc, la différence entre les deux images est égale à la première image, de luminosité élevée. Lorsque un objet est éloigné du plan observé, et pour une dimension appropriée de l'anneau, les deux images sont de luminosité comparable et la différence entre les eux images est donc de luminosité nulle. On constate donc que la différence entre les deux images permet de ne conserver que l'image du plan observé et d'éliminer tout ce qui vient des plans éloignés.

Plutôt que de sélectionner la lumière provenant d'un anneau on aurait pu pour la deuxième image conserver la totalité de la zone non éclairée, comme cela est fait dans US 6,687,052. Toutefois dans ce cas, et du fait que seul un ensemble réduit de points est éclairé, la luminosité de la deuxième image serait beaucoup plus élevée que la luminosité de la première image, ce qui perturbe les capteurs. L'utilisation d'un anneau permet également d'optimiser la résolution verticale et horizontale de l'image et de mieux rejeter la lumière ne provenant pas du plan observé.

Si on avait sélectionné pour la deuxième image la lumière provenant d'un anneau, mais en utilisant pour cette deuxième image un éclairage également annulaire et éclairant l'anneau dont provient la lumière sélectionnée, comme dans le cas de US 5,545,265, les caractéristiques de l'image résultante (troisième image) n'auraient pas été notablement améliorées.

Selon l'invention, lesdits moyens pour combiner lesdites première et seconde images déterminent la différence entre la première image affectée d'un premier coefficient multiplicateur, et la seconde image affectée d'un second coefficient multiplicateur. Les coefficients multiplicateurs permettent de s'adapter aux conditions exactes d'imagerie. L'image résultante peut éventuellement être ajustée ensuite en niveau et contraste, de manière en particulier à supprimer les éventuelles valeurs négatives avant affichage.

Le dispositif peut comprendre une pluralité de points d'éclairage et une pluralité de bandes, chacune desdites bandes entourant un point d'éclairage correspondant. Ce cas est celui d'un système multipoints. Dans ce cas, l'avantage le plus immédiat du système par rapport à un confocal multipoints simple est un très bon rejet de la lumière provenant de points qui ne sont pas dans le plan observé.

Dans ce cas, le moyen pour éclairer l'ensemble de points d'éclairage comprend de préférence un réseau de microlentilles séparant un faisceau laser en une pluralité de sous-faisceaux focalisés chacun sur un point d'éclairage. Par rapport à des méthodes en lumière cohérente, ceci permet d'obtenir un éclairage plus intense.

Le dispositif peut également ne comporter qu'un seul point d'éclairage obtenu par exemple par une lentille focalisant un faisceau laser sur le point d'éclairage. Dans ce cas, l'avantage le plus immédiat par rapport à un microscope confocal monopoint est l'amélioration de la résolution verticale et horizontale.

La première et la seconde image peuvent être formées successivement ou simultanément.

Selon une version de l'invention adaptée au cas ou la première et la seconde image sont formées successivement, les moyens pour sélectionner la lumière sont constitués par la superposition d'une première plaque opaque comprenant au moins un disque transparent, et d'une seconde plaque opaque comprenant au moins un disque transparent et au moins un anneau transparent, ainsi que par un moyen pour translater la seconde plaque par rapport à la première, pour amener le disque de la seconde plaque en regard du disque de la première plaque lors de l'acquisition de la première image, et pour amener ensuite l'anneau de la seconde plaque en regard du disque de la première plaque lors de l'acquisition de la seconde image. La superposition des deux plaques équivaut donc à un disque transparent lors de l'acquisition de la première image, et à un anneau transparent lors de l'acquisition de la seconde image. Lors de l'acquisition de la première image le disque doit coïncider avec l'image du point d'éclairage sur la plaque pour que celle-ci ait la fonction de sélection de la lumière provenant du point d'éclairage. Lors de l'acquisition de la deuxième image l'anneau entoure le point d'éclairage.

Selon une version de l'invention adaptée au cas ou les deux images sont acquises successivement : -
- les moyens pour sélectionner la lumière comprennent un masque composé de microprismes transparents ou réfléchissants permettant de renvoyer dans une première direction la lumière provenant des points d'éclairage et constituant un premier faisceau, et de renvoyer dans une seconde direction la lumière provenant de l'ensemble de bandes et constituant un deuxième faisceau.
- le dispositif comprend un moyen pour former la première image à partir du premier faisceau,
- le dispositif comprend un moyen pour former la deuxième image à partir du deuxième faisceau,

Cette version de l'invention est particulièrement adaptée à une imagerie rapide.

Cette technique d'imagerie rapide peut être généralisée à des systèmes d'acquisition d'image n'utilisant pas nécessairement un ensemble de points d'éclairage, mais pouvant par exemple utiliser des bandes d'éclairage parallèles.

Selon un aspect différent de l'invention, généralisée dans ce sens, l'invention consiste en un système de microscopie optique comportant :
- un moyen pour éclairer une zone d'éclairage dans un plan observé d'un objet observé et pour déplacer la zone d'éclairage dans le plan observé, pour balayer une zone observée,
- un masque divisant la lumière provenant du plan observé en un premier faisceau provenant de la zone d'éclairage et un deuxième faisceau provenant d'une zone de détection secondaire,
- un moyen pour former une première image à partir du premier faisceau,
- un moyen pour former une deuxième image à partir du deuxième faisceau,
- un moyen pour combiner la première et la deuxième image en une troisième image,

Caractérisé par le fait que ledit masque est composé de microprismes transmissifs ou réfléchissants permettant de renvoyer dans une première direction la lumière provenant de la zone d'éclairage et constituant un premier faisceau, et de renvoyer dans une seconde direction la lumière provenant de la zone de détection secondaire et constituant un deuxième faisceau.

Par rapport à la technique antérieure décrite dans US 6,687,052 l'utilisation de microprismes à la place d'un masque réfléchissant simplifie considérablement l'acquisition des deux images, du fait que le premier et le deuxième faisceau sont renvoyés non pas dans des directions opposées mais dans des directions légèrement différentes.

Pour séparer les deux faisceaux qui ont des directions légèrement différentes le système comporte de préférence :
- une lentille intermédiaire pour renvoyer le premier et le deuxième faisceau dans une zone de séparation ou ils sont spatialement disjoints,
- au moins un prisme ou un miroir placé dans la zone de séparation, pour modifier la direction d'au moins un des premier et deuxième faisceaux.

Pour permettre l'acquisition des deux images sur une même caméra, le système peut comprendre une lentille traversée simultanément par le premier et le deuxième faisceau après la zone de séparation, et formant la première et la seconde image dans deux zones distinctes d'un même plan image.

Afin de simplifier l'éclairage de l'objet en utilisant pour générer une figure d'éclairage le même masque de microprismes utilisé pour séparer les premier et deuxième faisceau, le système comprend de préférence:
- un premier diaphragme d'ouverture traversé par le faisceau lumineux d'éclairage avant qu'il ne parvienne au masque composé de microprismes transparents ou réfléchissants
- un second diaphragme d'ouverture traversé par le faisceau lumineux d'éclairage provenant du masque et dirigé vers l'objet observé,
et le premier diaphragme d'ouverture est positionné de manière à ce que la partie du faisceau d'éclairage qui parvient à une zone du masque qui transmet ledit deuxième faisceau soit ensuite arrêtée par le second diaphragme d'ouverture, et de manière à ce que la partie du faisceau d'éclairage qui parvient à une zone du masque qui transmet ledit premier faisceau traverse ensuite le second diaphragme d'ouverture.

Suivant une version de l'invention adaptée à un éclairage incohérent, la zone d'éclairage est constituée d'un ensemble de bandes parallèles entre elles, et par le fait que la zone de détection secondaire est constituée d'un ensemble de bandes alternant avec les bandes de la zone d'éclairage.

Suivant une version de l'invention adaptée à un éclairage cohérent, la zone d'éclairage est constituée par un ensemble de points, et par le fait que la zone de détection secondaire est constituée d'un ensemble de bandes entourant chacun des points de la zone d'éclairage.

La méthode d'acquisition successive des images peut également être généralisée ; suivant un aspect de l'invention généralisé dans ce sens, l'invention consiste en un système de microscopie optique comportant :
a) un moyen pour éclairer une zone d'éclairage sur l'objet observé, à l'aide d'un faisceau d'éclairage,
b) un moyen pour sélectionner la lumière provenant d'une zone de détection et constituant un faisceau à détecter,
c) un moyen pour former dans un plan image une image de l'objet observé à partir du faisceau à détecter,
d) un dispositif de balayage pour déplacer la zone d'éclairage afin de balayer l'ensemble de la zone observée, et pour déplacer simultanément l'image de la zone d'éclairage dans le plan image,
e) un capteur disposé dans le plan image, pour détecter successivement une première image de l'objet observé, puis une deuxième image de l'objet observé,
f) un moyen pour combiner la première et la deuxième image, pour obtenir une image améliorée,
Caractérisé par les faits suivants :
- il comprend un masque disposé sur le chemin du faisceau à détecter ou sur le chemin du faisceau d'éclairage, délimitant la zone d'éclairage ou la zone de détection, et atteint par un seul desdits faisceau à détecter et faisceau d'éclairage,
- il comprend un moyen pour modifier les caractéristiques de ce masque entre l'acquisition de la première image et l'acquisition de la deuxième image, de manière à modifier la zone de détection en laissant inchangée la zone d'éclairage, ou de manière à modifier la zone d'éclairage en laissant inchangée la zone de détection.

le masque comprend par exemple une alternance de bandes, et le le moyen pour modifier est alors un moyen pour déplacer le masque suivant une direction non parallèle auxdites bandes.

Le masque, comme indiqué plus haut, peut être constitué par la superposition d'un premier réseau de disques et d'un second réseau comprenant des disques et des anneaux, les moyens pour modifier les caractéristiques du masque étant constitués par un moyen pour translater le second réseau par rapport au premier réseau, pour que les disques du premier réseau sélectionnent alternativement les anneaux ou les disques du second réseau.

### Description rapide des figures :

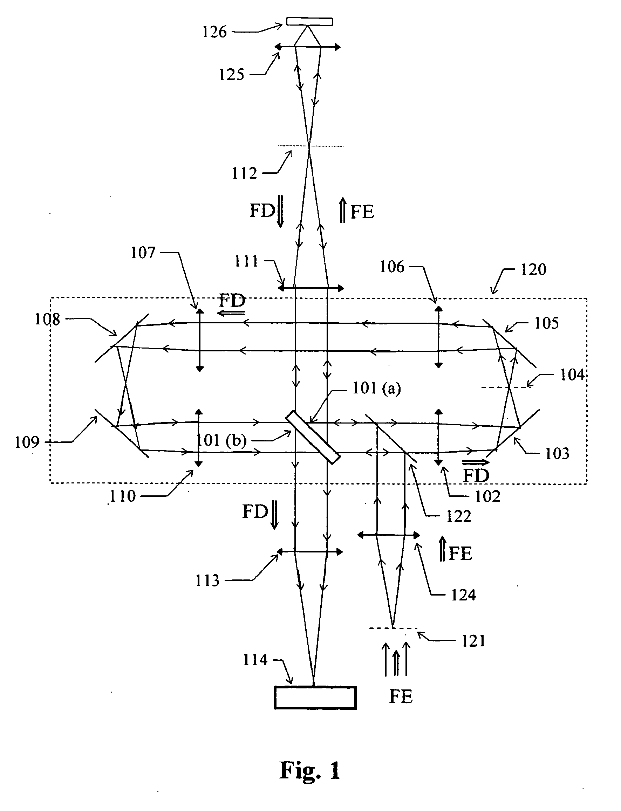

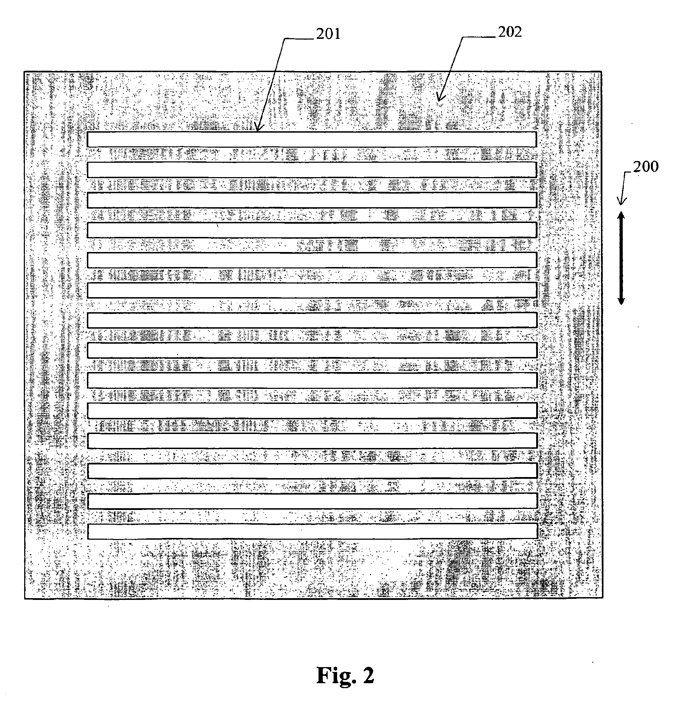

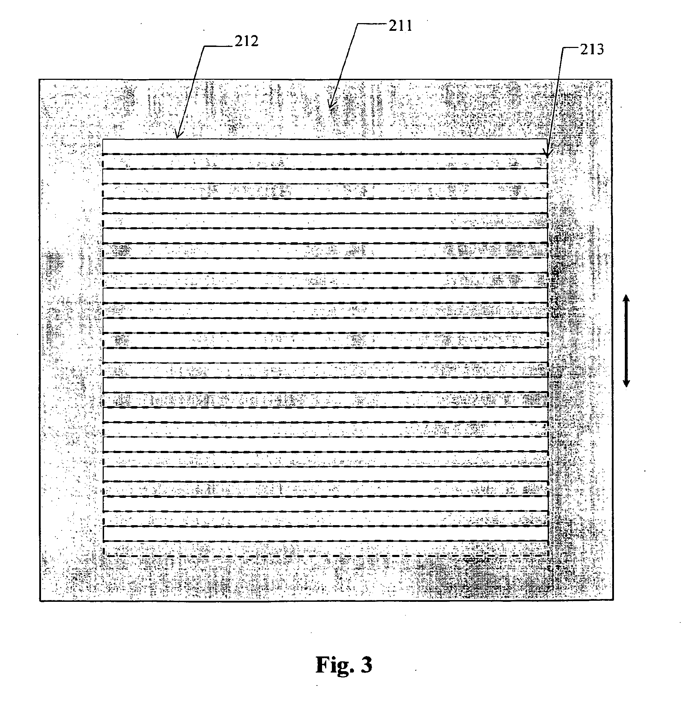

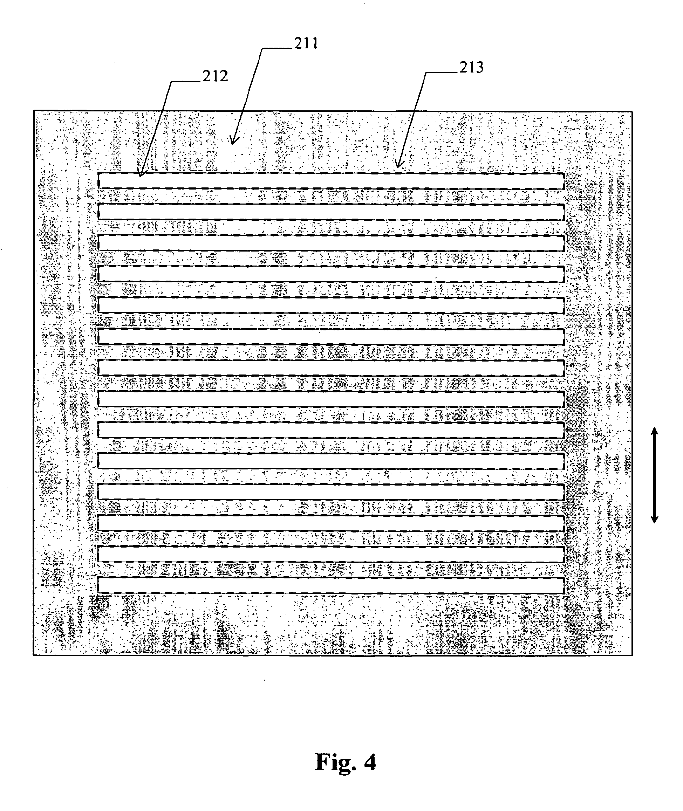

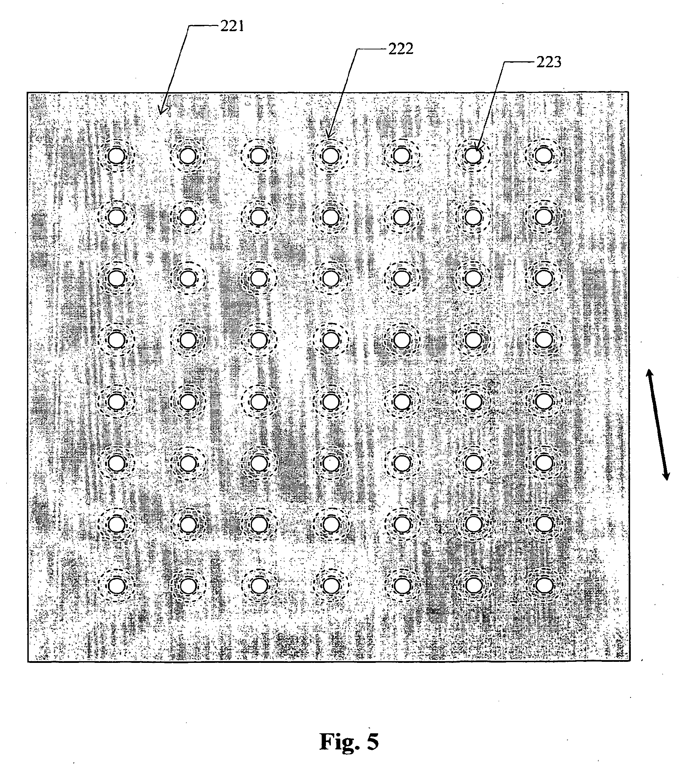

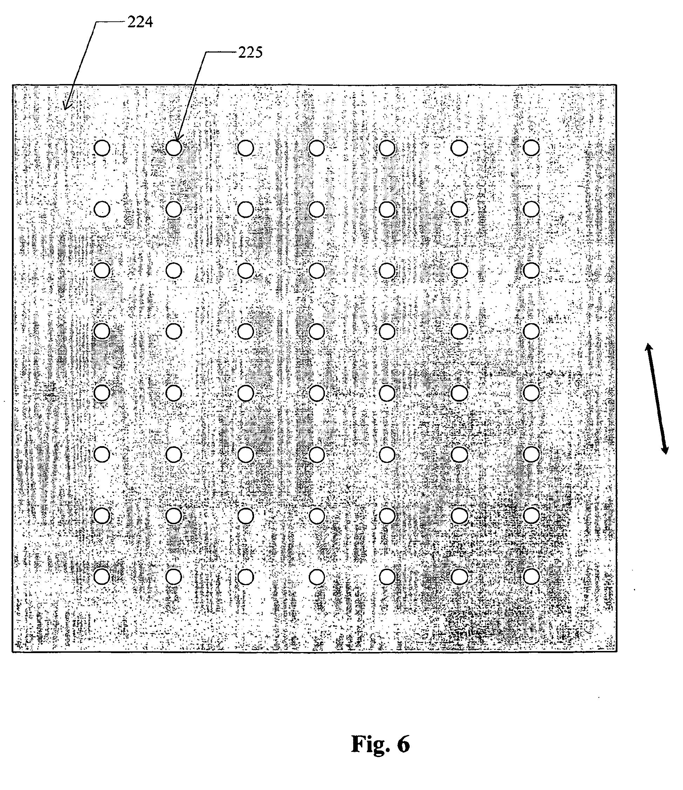

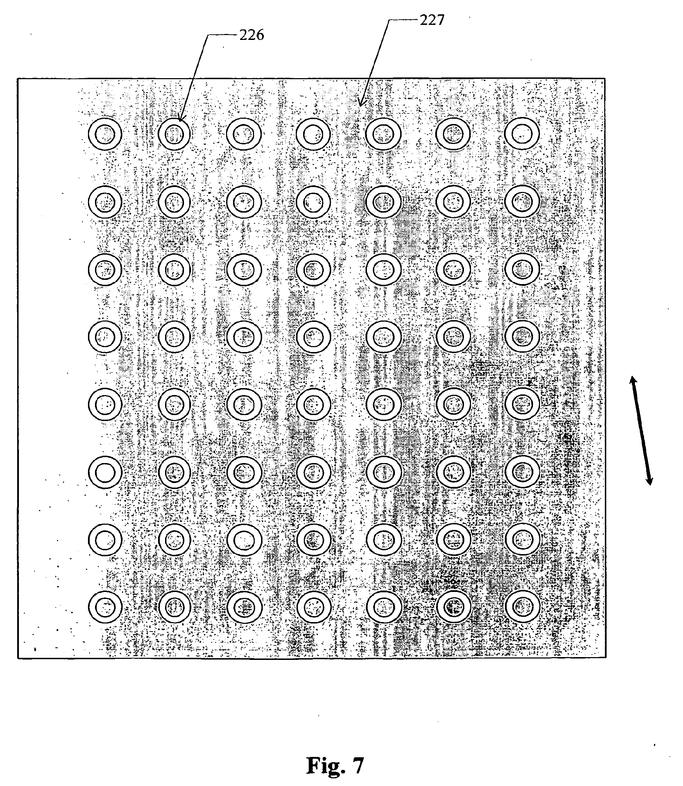

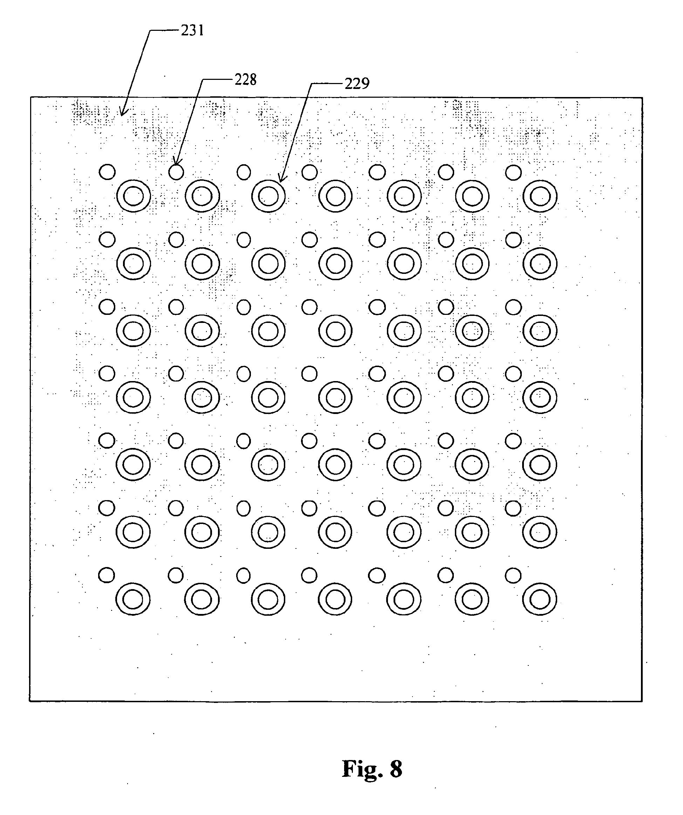

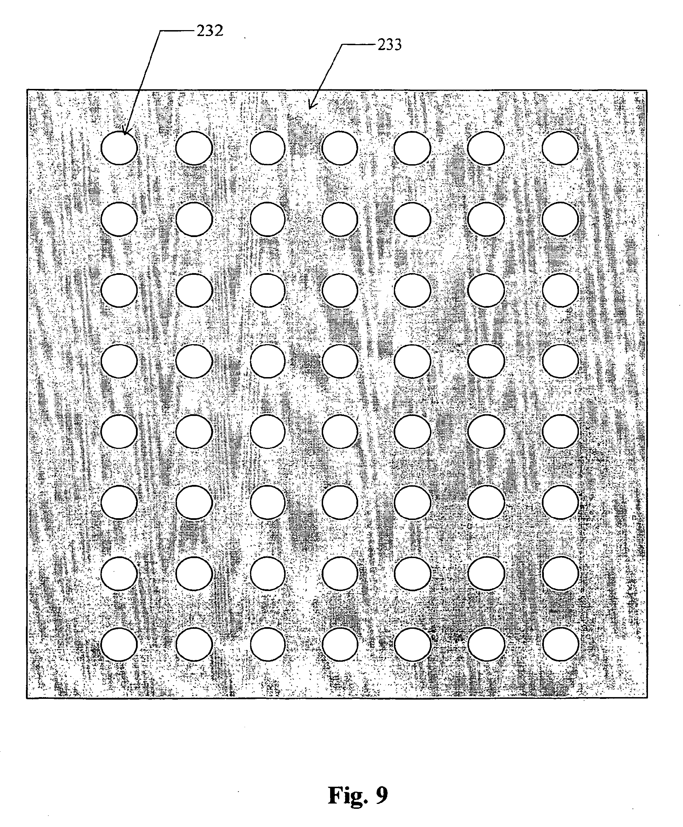

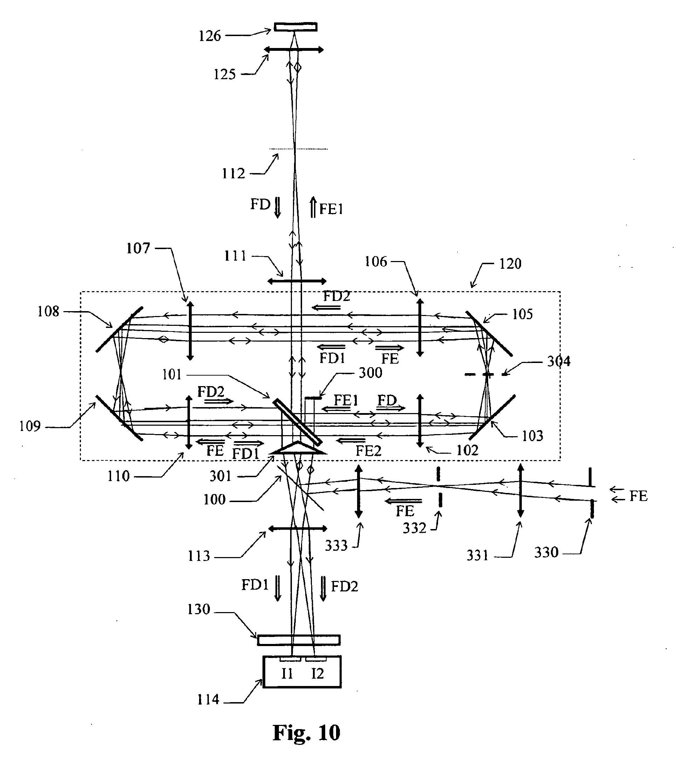

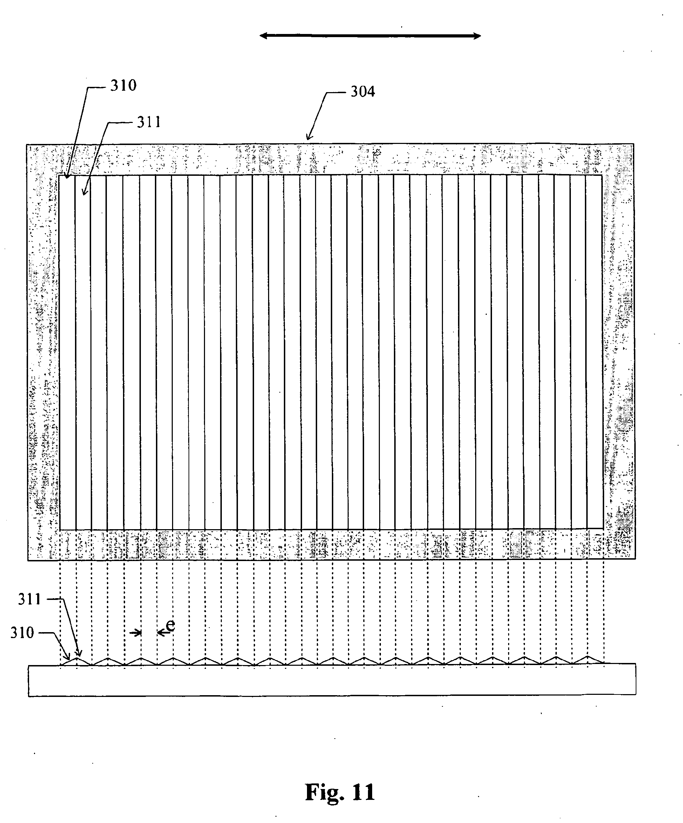

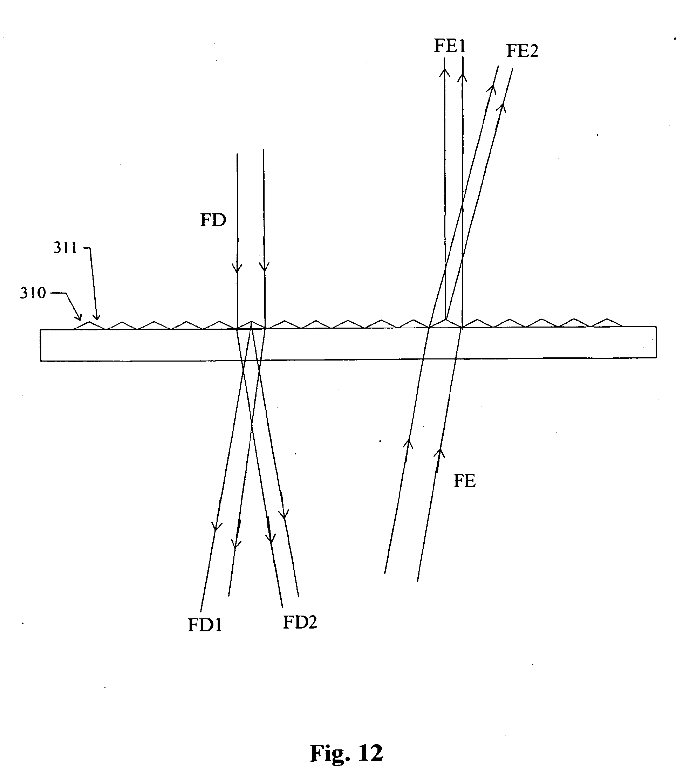

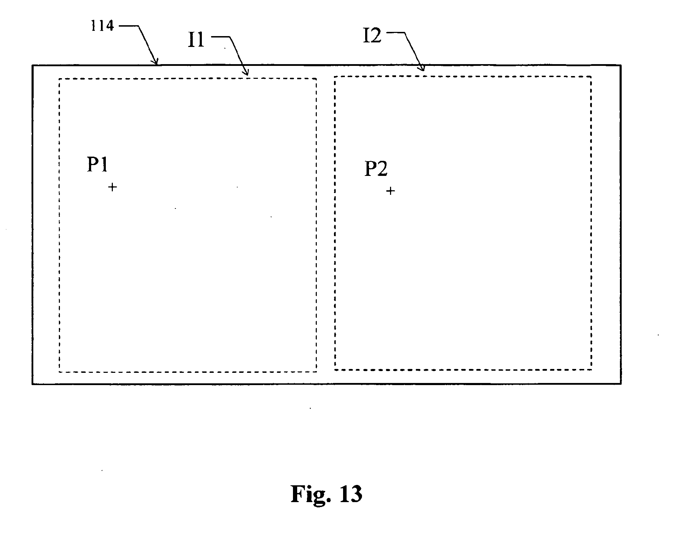

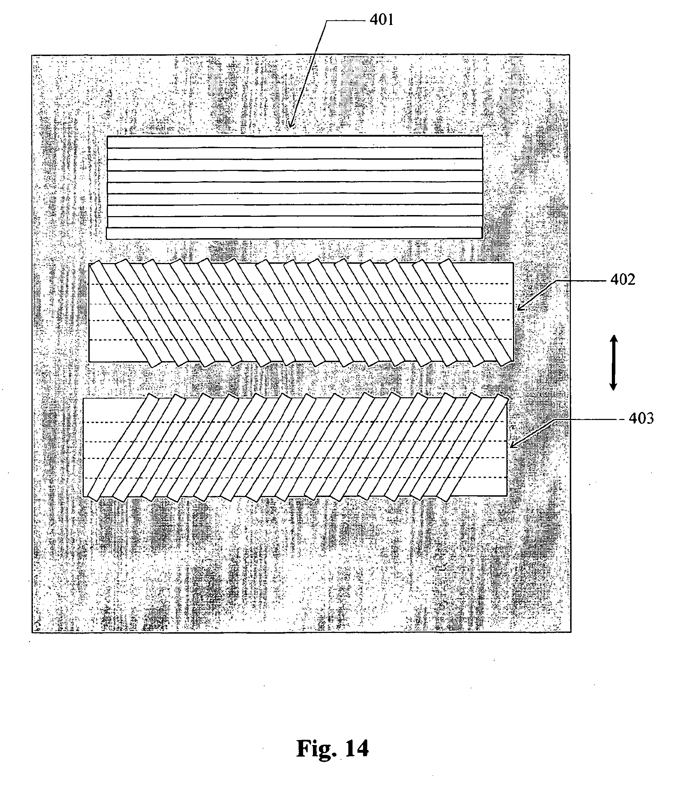

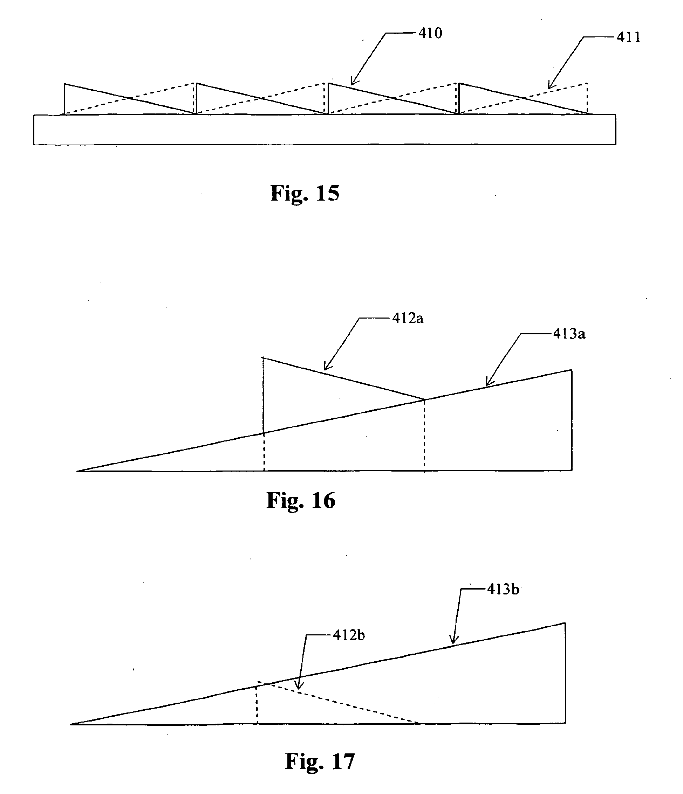

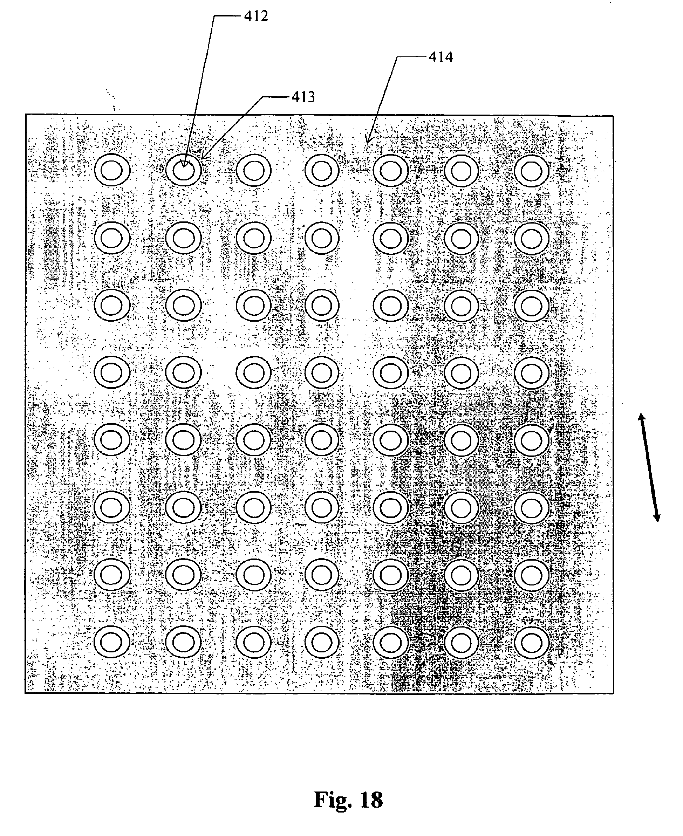

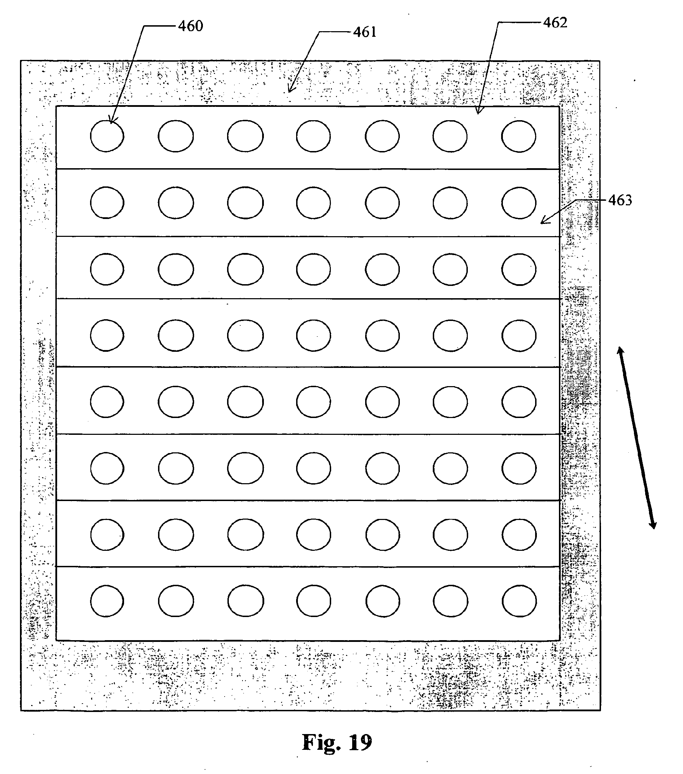

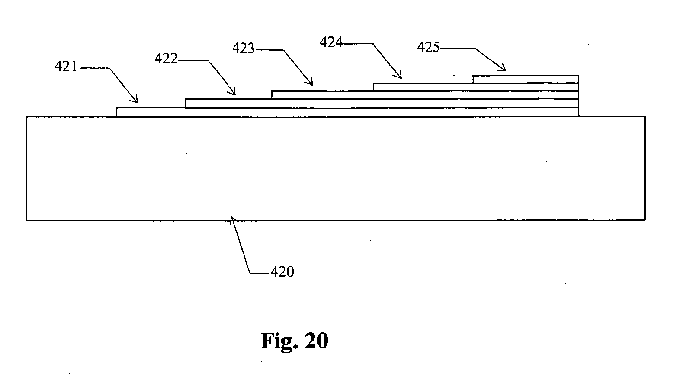

La figure 1 représente le système de balayage utilisé dans un premier mode de réalisation de l'invention. La figure 2 représente un masque utilisé dans ce mode de réalisation. Les figures 3 et 4 représentent des superpositions des images géométriques de deux masques du même type correspondant à deux positions de ces masques. La figure 5 représente la superposition des images géométriques des masques des figures 6 et 7. Les figures 8 et 9 représentent deux plaques litographiées dont la superposition permet d'obtenir les masques des figures 6 et 7. La figure 10 montre un système de balayage modifié pour permettre une acquisition en temps réel dans des conditions de luminosité optimales. La figure 11 montre le masque à microprismes utilisé avec le dispositif de la figure 10. La figure 12 illustre le fonctionnement de ce masque. La figure 13 ilustre la formation simultanée de deux images sur le capteur. La figure 14 montre un masque à microprismes amélioré pour une meilleure isotropie de l'image. La figure 15 montre une vue de coté de ce masque amélioré. La figure 16 montre une vue de coté d'une partie filtrante du masque de la figure 18. La figure 17 montre, dans une réalisation différente, une vue de coté de la même partie filtrante. La figure 18 montre un masque à microprismes organisés en disques et anneaux séparés. La figure 19 montre un masque à microprismes organisés en disques inclus dans des bandes. La figure 20 illustre un mode de réalisation des microprismes.

### Premier mode de réalisation:

Ce premier mode de réalisation est représenté sur la figure 1.

Un faisceau d'éclairage FE provenant d'une lampe à arc munie d'un condenseur traverse un masque 121. On a représenté sur la figure la partie du faisceau FE qui est issue d'un point du masque 121. Le faisceau d'éclairage FE traverse ensuite une lentille 124 dont un plan focal est sur le masque 121. Il est ensuite renvoyé par le miroir dichroïque 122 vers le miroir galvanométrique 101 puis vers la lentille 111. Le miroir galvanométrique est dans un plan focal de la lentille 124 et dans un plan focal de la lentille 111. Le faisceau d'éclairage ayant traversé la lentille 111 parvient ensuite à un plan image intermédiaire 112 puis est focalisé par un objectif de microscope 125 sur un plan observé d'un objet observé 126, éclairant une zone d'éclairage qui est donc l'image des parties transparentes du masque 121. Avantageusement, au lieu d'un objectif de microscope 125 à distance finie, on peut utiliser un objectif à distance infinie couplé à une lentille de tube. L'objet observé réémet par fluorescence un faisceau FD à une longeur d'onde différente de la longeur d'onde incidente.

Le faisceau lumineux FD provenant de l'objet observé 126 et collecté par l'objectif 125 traverse le plan image intermédiaire 112 puis la lentille 111 dont un plan focal est le plan 112. On a représenté sur la figure la partie du faisceau FD provenant d'un point particulier de l'objet observé éclairé par la partie du faisceau FE provenant d'un point du masque 121, également représentée. Après traversée de la lentille 111 le faisceau FD est en zone afocale, c'est-à-dire que le faisceau provenant d'un point donné du plan 112 devient parallèle après traversée de la lentille 111. Le faisceau parvient ensuite à l'ensemble de balayage et de compensation 120 dont l'entrée et la sortie sont en zone afocale. Le premier élément rencontré par le faisceau dans le dispositif de balayage est la face objet 101(a) du miroir galvanométrique située dans un plan focal de la lentille 111. Cette face du miroir galvanométrique réfléchit le faisceau vers la lentille 102 dont un plan focal est sur la face 101 (a) du miroir galvanométrique. Après traversée de la lentille 102 le faisceau parvient au miroir 103 qui réfléchit le faisceau vers un masque 104 situé dans un plan focal de la lentille 102. Le masque 104 sélectionne la lumière provenant d'une zone de détection qui est l'image des parties transparentes du masque 104. Le faisceau ayant traversé le masque 104 est ensuite réfléchi par le miroir 105 puis traverse la lentille 106 dont un plan focal est sur le réseau 104. Il traverse alors la lentille 107 dont un plan focal est confondu avec un second plan focal de la lentille 106. Il est réfléchi par les miroirs 108 et 109 puis traverse la lentille 110 dont un plan focal est confondu avec le second plan focal de la lentille 107. Il est réfléchi par la face image 10 1 (b) du miroir galvanométrique et sort du dispositif de balayage 120. Il est alors focalisé dans le plan d'un capteur CCD 114 par la lentille 113. Les lentilles 102,106,107,110 sont identiques entre elles. Ce schéma est inspiré du brevet PCT/FR03/00699. Un mode de réalisation équivalent utilise le scanner à 2 lentilles et 4 miroirs décrit dans le brevet PCT/FR03/00699. Ce schéma correspond à un éclairage en fluorescence, avec éclairage de l'objet par une longueur d'onde d'excitation réfléchie par le dichroïque et détection d'une longeur d'onde d'émission traversant le dichroïque. Des résultats améliorés peuvent être obtenus en ajoutant un filtre monochromateur devant le capteur. Le schéma peut être adapté à un éclairage laser multipoints en remplaçant le faisceau d'éclairage FE parvenant au masque 121 par un faisceau laser, et en remplaçant le masque 121 par un réseau de microlentilles situées dans un plan approprié pour générer une pluralité de faisceaux focalisés sur une pluralité de points dans le plan du masque 121. Il peut être adapté de manière similaire à un éclairage monopoint, ce qui nécessite alors un balayage bidirectionnel à l'aide du miroir galvanométrique. Il peut être adapté à un éclairage halogène en réflexion en remplaçant le faisceau d'éclairage FE parvenant au masque 121 par un faisceau issu d'une lampe halogène et en remplaçant le miroir dichroïque 122 par un miroir semitransparent. En déplaçant la lentille 124 ou le masque 121 suivant l'axe optique, on peut corriger des aberrations chromatiques induites par l'objectif de microscope entre la longueur d'onde d'excitation et la longueur d'onde d'émission.

Par exemple les masques 121 et 104 peuvent être du type représenté sur la figure 2 ou la flèche 200 représente la direction de balayage. Le masque de la figure 2 est composé de bandes transparentes 201 sur un fond opaque 202. La première image est réalisée sur le capteur CCD 114 lorsque les zones d'éclairage et de détection sont superposées comme indiqué sur la figure 4 ou les parties claires 212 représentent les zones d'éclairage (image géométrique dans l'objet observé du masque 121) contrastant par rapport aux zones non éclairées 211, et ou les pointillés 213 représentent la limite de la zone de détection (image géométrique dans l'objet observé du masque 104). Entre l'acquisition de la première image et l'acquisition de la deuxième image un des masques 121 ou 104 est translaté de sorte que lors de l'acquisition de la 2eme image les zones d'éclairage et de détection sont disjointes comme représenté sur la figure 3 ou les parties claires 212 représentent la zone d'éclairage (image géométrique du masque 121) contrastant par rapport aux zones non éclairées 211, et ou les pointillés 213 représentent la limite de la zone de détection (image géométrique du deuxième masque 104). Une image résultante peut être ensuite obtenue par soustraction des première et deuxième images affectées chacune d'un coefficient multiplicateur qui peut être ajusté empiriquement pour obtenir la meilleure qualité d'image possible et qui dans le cas présent vaut approximativement 1. Une constante peut être ajoutée à cette image pour éviter d'éventuelles valeurs négatives dues au bruit. De préférence, la distance entre deux bandes du masque est égale à la largeur d'une bande, et vaut typiquement 20 à 60 microns pour un microscope x100 d'ouverture numérique 1,4. Typiquement, pour ce dimensionnement du système de bandes, si la première image est notée I1 [i,j] et la deuxième est notée I2[i,j] on peut calculer la résultante Il [i,j]-12[i,j].

Les masques 121 et 104 peuvent également être du type représenté sur les figures 7 et 6. Lors de l'obtention de la première image,ces deux masques sont formé de disques 225 sur fond opaque 224 (figure 6), dont le diamètre peut être proche de celui de la tache d'Airy ou de la demi tache d'Airy selon la précision recherchée, et les zones d'éclairage et de détection, constituées de microdisques, sont exactement superposées. Lors de l'obtention de la deuxième image le masque 121 est inchangé et le masque 104 est formé d'anneaux 226 sur fond opaque 227 (figure 7), la zone d'éclairage et la zone de détection se superposant comme indiqué sur la figure 5. Sur cette figure, la zone claire 223 représente la limite de la zone d'éclairage et les pointillés 222 limitent la zone de détection, en forme d'anneau. L'épaisseur des anneaux peut être par exemple d'un demi diamètre d'Airy. L'image résultante est obtenue comme précédemment. Pour changer de masque entre la première et la deuxième image on utilise par exemple un masque formé de deux vitres litographiées plaçées l'une contre l'autre comme indiqué dans le brevet PCT/FR02/04382. Une des vitres est du type représenté sur la figure 8 et l'autre est du type représenté sur la figure 9. En faisant glisser ces vitres l'une contre l'autre on peut superposer alternativement un trou 228 ou un anneau 229 à un trou 232 et donc alterner entre le masque représenté figure 6 et celui représenté figure 7.

Lorsque le système est adapté à un éclairage laser, on peut conserver le masque 104 représenté sur les figures 6 et 7. Le masque 121 est simplement remplacé par un réseau de microlentilles qui a un effet équivalent, le plan focal des microlentilles étant dans le plan focal de la lentille 124.

### Deuxième mode de réalisation (mode préféré de réalisation)

Le mode de réalisation précédent présente le défaut de ne pas utiliser de manière optimale l'intensité lumineuse disponible du fait que la première et la deuxième image ne sont pas obtenues simultanément. Le présent mode de réalisation, illustré par la figure 10, résout ce problème. Le faisceau d'éclairage FE est diaphragmé par un diaphragme d'ouverture 330, traverse la lentille 331, est diaphragmé par un diaphragme de champ 332, et traverse la lentille 333 avant de parvenir au dichroïque 100. Après réflexion par le dichroïque 100 il parvient à la moitié droite du prisme 301. Le diaphragme d'ouverture 330, situé dans un plan conjugué à la zone dans laquelle se trouvent le prisme 301 et le miroir galvanométrique, a pour fonction de limiter l'extension du faisceau d'éclairage sur le prisme 301. Le diaphragme de champ 332 limite l'ouverture du faisceau parvenant au prisme 301. Après traversée du prisme 301, le faisceau FE est réfléchi par le miroir galvanométrique 101. Après avoir traversé les lentilles 110, 107, 106 il parvient au masque 304. Le masque 304 est représenté sur la figure 11. Il est composé d'une vitre en verre sur laquelle sont réalisés des microprismes, par exemple 310 et 311. Comme sur les autres dessins la direction de balayage est indiquée par la flèche double épaisse. La figure 12 illustre le fonctionnement de ces microprismes. Le faisceau d'éclairage FE parvenant sur un couple de prismes est divisé en un faisceau FE1 et un faisceau FE2. Le faisceau FE2, après traversée de la lentille 102 puis réflexion par le miroir 103 et la face (a) du miroir galvanométrique 101, est arrêté par le diaphragme d'ouverture 300. Le faisceau FE1, après réflexion par le miroir 103 et la face (a) du miroir galvanométrique 101, traverse la lentille 111 et est dirigé vers le plan intermédiaire 112 puis vers l'objet à observer 126. Par conséquence, l'objet à observer est éclairé par une zone d'éclairage en forme de grille, les microprismes orientés comme 311 générant des bandes claires (zone d'éclairage), et les microprismes orientés comme 310 générant des bandes foncées du fait que le faisceau FE2 provenant de ces microprismes est arrêté par le diaphragme d'ouverture 300. La zone d'éclairage balaye l'objet observé lorsque le miroir galvanométrique se déplace.

Le faisceau FD revenant de l'objet observé parvient à nouveau au masque 304. Comme indiqué sur la figure 12, le faisceau FD provenant de l'objet observé est divisé par les microprismes en un premier faisceau FD1 et un deuxième faisceau FD2 différant entre eux par leur orientation. Ces deux faisceaux reviennent ensuite à la face (b) du miroir galvanométrique 101 après avoir passé les lentilles 106, 107,110. A proximité de la face (b) du miroir galvanométrique 101 les deux faisceaux sont séparés spatialement. Chacun des deux faisceau traverse un demi-prisme différent (les deux moitiés du prisme 301) qui en modifie l'orientation. Après traversée de la lentille 113 les deux faisceaux parviennent en des points différents du capteur 114. Il se forme dans le plan du capteur CCD 114 deux images 11 et 12 dont l'extension est représentée sur la figure 13. La taille de ces images est déterminée par le diaphragme de champ 332 qui doit donc de préférence être rectangulaire. La première image (I1) est obtenue à partir du premier faisceau, qui a retraversé les microprismes orientés comme 311, déjà traversés par le faisceau d'éclairage. Elle est donc obtenue à partir d'une zone de détection coïncidant avec la zone d'éclairage. La deuxième image (12) est obtenue à partir du deuxième faisceau. Ce deuxième faisceau a retraversé les microprismes orientés comme 310, qui associés au diaphragme 300 avaient arrêté le faisceau d'éclairage. Elle est donc obtenue à partir d'une zone de détection complémentaire de la zone d'éclairage. Chaque point de l'objet observé a deux points image, par exemple P1 et P2, dont l'un se trouve sur la première image I1 et l'autre se trouve sur la seconde image 12. Le vecteur P1P2 ne dépend pas du point de l'objet observé. Une image résultante est formée en calculant pour chaque point de l'objet observé la différence entre les valeurs acquises sur le capteur pour ses deux points image P1 et P2 après que le miroir galvanométrique ait réalisé un balayage de l'image du masque sur l'objet observé. Avant calcul de la différence il est possible de multiplier chaque image par un coefficient multiplicatif ayant pour fonction d'ajuster au mieux le résultat pour obtenir la meilleure image possible.

Le dimensionnement de la grille peut être effectué comme précédemment à savoir que la largeur e d'un microprisme, indiquée figure 11, et correspondant à la largeur d'une bande, peut être par exemple de 21 microns. La largeur d'un microprisme peut aussi être augmentée de manière à rendre le système moins résolvant mais plus robuste aux aberrations, en particulier chromatiques.

Une variante du masque est représentée par la figure 14. Il permet de rendre la résolution plus isotrope. Les bandes représentées correspondent aux bandes filtrant la première et la seconde image. Le réseau de bandes 401 est identique à celui de la figure 11. Le réseau de bandes 402 est tourné de 60 degrés. Toutefois, il doit renvoyer la lumière correspondant à la première image et à la seconde image dans la même direction que le réseau de bandes 401. C'est pourquoi la pente des prismes constituant les différentes bandes du réseau 402 n'est pas maximale dans le sens orthogonal à la direction des bandes du réseau 402, mais dans le sens orthogonal à la direction des bandes du réseau 401. Les pointillés traversant le réseau de bandes 401 indiquent des lignes de fracture sur lesquelles la hauteur de chaque prisme est ramenée à zéro, destinés à éviter que les prismes ne deviennent trop épais. La figure 15 montre une vue suivant la direction de ces lignes de fracture. Suivant cette direction on observe les prismes 410 correspondant à un réseau de bandes, et les prismes 411 correspondant au réseau de bandes alternées. Lors de l'acquisition des images la zone éclairée sur le masque traverse les trois réseaux 401,402 et 403.

Le système peut également être réalisé avec un masque de fonctionnalité similaire à celle des masques des figure 5 à 9. La figure 18 montre un tel masque. Chaque point de ce masque comprend un microprisme de section circulaire 412 et un microprisme de section annulaire 413. Ces microprismes sont représentés en vue de coté sur les figures 16 (412a et 413a) et sur la figure 17 (412b et 413b) correspondant à des réalisations techniques légèrement différentes. Bien entendu la totalité des microprismes circulaires ont leur pente orientée dans la même direction, qui compte tenu de la configuration employée correspond à la direction de balayage, et la totalité des microprismes annulaires ont leur pente orientée dans la même direction mais en sens inverse.

Toutefois, en particulier lorsque la zone d'éclairage est constituée par un ensemble de disques rapprochés, il est préférable que la zone de détection pour l'obtention de la deuxième image soit la complémentaire de la zone de détection pour l'obtention de la première image. La figure 19 illustre le masque correspondant. Il comprend, sur un cadre absorbant 461, des microprismes circulaires , par exemple 460, ayant tous une pente dans la même direction et le même sens, et des microprismes en forme de bandes 462 ou 463 interrompus par les microprismes circulaires et ayant tous une pente dans le sens opposé à celle des microdisques circulaires. Notons que si les microprismes en formes de bandes ont une pente orientée perpendiculairement à la direction des bandes, et donc dans le cas représenté sur la figure, en biais par rapport à la direction de balayage, alors il est préférable de faire légèrement tourner le prisme 301 et le caprteur 114 autour de l'axe optique, pour que le prisme 301 sépare deux zones qui ne sont plus symétriques par rapport à un plan orthogonal à la figure, mais par rapport à un plan qui est également en biais.

Les microprismes peuvent être réalisés par des techniques d'usinage au diamant suivi de moulage. Les microprismes peuvent également être réalisés par litographie dans la mesure ou leur pente est faible et ou leur largeur est raisonnable. Ils sont alors approximés par une succession de couches de diélectrique comme indiqué sur la figure 20. Un microprisme est réalisé sur un substrat 420 par dépôt de plusieurs couches 421 à 425 par litographie. On peut aussi réaliser un moule par litographie à l'aide de couches métalliques puis mouler le réseau de microprismes dans un polymère.

Ce mode de réalisation est particulièrement avantageux car il permet d'obtenir en temps réel des images dans des conditions optimales d'utilisation de l'information.

Bien qu'il ait été illustré dans une configuration ou le masque à microprismes est traversé à la fois par le faisceau d'éclairage et par le faisceau provenant de l'objet observé, ce mode de réalisation peut également être adapté à une configuration proche du premier mode de réalisation, dans laquelle le faisceau d'éclairage ne traverse pas le masque à microprismes, étant déjà filtré par un masque classique disposé sur la ligne d'éclairage. Dans ce cas, le faisceau d'éclairage FE est unique (il n'est donc pas nécessaire de prévoir un diaphragme 300) et est traité comme sur la figure 1. Le faisceau revenant de l'objet parvient au masque à microprismes et est donc traité comme sur la figure 10. L'avantage d'une configuration proche du premier mode de réalisation est que la différence d'aberration chromatique entre une longueur d'onde d'excitation de la fluorescence et une longueur d'onde de détection de la fluorescence peut être compensée par un déplacement suivant l'axe optique du masque disposé sur la ligne d'éclairage ou de la lentille 124 représentée figure 1.

### Variantes du dispositif de balayage.

Le système peut également être utilisé avec d'autres dispositifs de balayage.

Par exemple il est possible de réaliser le masque à microprismes sur un disque de Nipkow. Sur la figure 10, il suffit de remplacer le masque fixe par un masque monté sur un disque tournant, et de remplacer le miroir galvanométrique par un miroir fixe, pour obtenir un système fonctionnel. Toutefois les caractéristiques de balayage (trajectoire circulaire) tendent à dégrader l'image. Le système peut être « déplié » puisque le miroir galvanométrique est inutile, mais il reste nécessaire de générer des plans appropriés pour les différents diaphragmes et masques, et le système n'est donc pas notablement simplifié.

Au lieu d'un disque de Nipkow, on peut déplacer les microprismes à l'aide d'un dispositif permettant une translation (moteur pas à pas par exemple). Cette solution évite les problèmes liés à la trajectoire circulaire. Le déplacement peut être très court (au minimum, la largeur d'un microprisme soit quelques dizaines de microns) ce qui permet un balayage rapide. Le dispositif de translation peut également générer un déplacement de type oscillatoire des microprismes si ceux-ci sont montés à l'aide de ressorts de caractéristiques appropriées.

Le système peut également être utilisé avec des dispositifs de balayage du type décrit dans le brevet PCT/FR01/02890, par exemple sur la figure 22 de ce brevet, et qui impliquent que le masque fonctionne en réflexion. Dans ce cas les bandes, disque ou anneaux des masques sont réalisés par dépôt d'une couche réfléchissante sur un fond transparent pour les deux premiers modes de réalisation, ou par réalisation de prismes recouverts d'une couche réfléchissante, pour le troisième mode de réalisation. Dans le cas d'une réalisation des prismes par litographie, cette solution simplifie la réalisation car les dépôts peuvent tous être métalliques (les prismes réfléchissent la lumière au lieu de la transmettre). D'une manière générale les microprismes peuvent donc être aussi bien des prismes fonctionnant en réflexion que des prismes fonctionnant en transmission. Dans le cas ou les images sont obtenues successivement, il est difficile d'utiliser un disque de Nipkow car celui-ci ne permet pas d'avoir une zone de détection distincte de la zone d'éclairage, à moins toutefois de l'équiper d'un réseau de trous fait de deux plaques superposées et permettant d'alterner par exemple des trous en forme de disque et des trous en forme d'anneaux. Du fait que le disque tourne en permanence, ceci est difficile.

### Techniques pour déterminer le coefficient multiplicateur

D'une manière générale la combinaison de la première image et de la deuxième image se fait par soustraction de ces deux images affectées d'un coefficient multiplicatif. En fait il n'y a qu'un seul coefficient à déterminer si on fait abstraction du niveau général de luminosité de l'image. La superposition de deux images 11 [i,j] et 12[i,j],ou i et j sont les coordonnées entières d'un point du capteur dans le plan, se calcule
alors comme IR[i,j]= C1*(I1[i,j]-C2*I2[i,j] - C3)
Avec'C3=Min(II[i,j]-C2*I2[i,j])
Et C1=256/Max(II[i,j]-C2*I2[i,j]) - C3)
Dans le cas par exemple d'un affichage sur 256 niveaux de gris , le symbole * représentant la multiplication. On peut écrire un programme affichant l'image résultante IR[i,j] en fonction du coefficient multiplicateur C2 et comportant une barre d'ajustement permettant de faire varier progressivement ce coefficient entre deux valeurs extrêmes. En faisant varier C2 et en observant l'image résultante, on arrive assez bien à déterminer la valeur de C2 qui génère l'image résultante la plus nette et la plus contrastée, dans laquelle les éléments hors plan de focalisation sont le mieux éliminés. Une fois que ce coefficient C2 est déterminé pour un système d'imagerie donné, il reste normalement indépendant de l'échantillon observé.

On peut également déterminer le coefficient C2 par un calcul numérique visant à minimiser l'entropie de la résultante IR[i,j]. Par exemple on calcule l'entropie de IR[i,j] pour un ensemble de valeurs de C2 et on choisit la valeur correspondant au minimum d'entropie. L'entropie se calcule comme la somme sur l'ensemble des indices i,j de -IR[i,j]*log(IR[i,j]/256).

### Choix des zones d'éclairage et de détection :

On peut acquérir une première image, dite « pseudo-confocale » I1[i,j], pour laquelle la zone d'éclairage et la zone de détection sont confondues. On peut acquérir une deuxième image dite « complémentaire » 12[i,j] pour laquelle la zone de détection est la complémentaire de la zone d'éclairage elle-même inchangée. L'image « non confocale » vaut alors IN[i,j]= I1[i,j] + I2[i,j]. L'image I1[i,j] peut s'écrire 11 [i,j]=K1*IN[i,j]+K2*IC[i,j] ou IC[i,j] est une image confocale « pure » c'est-à-dire dont la luminosité n'augmente pas quand l'épaisseur de la zone fluorescente augmente. K1 et K2 sont des constantes dépendant de la configuration exacte des zones d'éclairage et de détection pour l'acquisition des deux images. On peut donc écrire IC[i,j] = 1/K2*I1[i,j] - K1/K2*IN[i,j] ou IC[i,j] = (1- K1)/K2*I1[i,j] - K1/K2*12[i,j]. La seconde formule donne l'image confocale en fonction de l'image complémentaire et de l'image pseudo-confocale. Si on acquiert l'image pseudo-confocale et l'image non confocale pour calculer l'image confocale, on perd en rapport signal sur bruit. Si on utilise des zones non complémentaires on soustrait une image partiellement confocale ce qui peut permettre une élimination plus complète des basses fréquences, mais ce n'est pas en général l'effet recherché et il est donc préférable d'utiliser des zones complémentaires.

### Applications industrielles :

Le présent dispositif d'imagerie peut être utilisé en microscopie pour l'imagerie d'échantillons biologiques ou de matériaux.

## Revendications

1. Système de microscopie optique comportant :
a) un moyen pour éclairer une zone d'éclairage sur l'objet observé, (126) à l'aide d'un faisceau d'éclairage (FE),
b) un moyen pour sélectionner la lumière provenant d'une zone de détection et constituant un faisceau à détecter (FD),
c) un moyen pour former dans un plan image (114) une image de l'objet observé (126) à partir du faisceau à détecter (FD),
d) un dispositif de balayage (120) pour déplacer la zone d'éclairage afin de balayer l'ensemble de la zone observée, et pour déplacer simultanément l'image de la zone d'éclairage dans le plan image (114),
e) un capteur disposé dans le plan image, pour détecter successivement une première image (I1) de l'objet observé, puis une deuxième image (I2) de l'objet observé,
f) un moyen pour combiner la première (I1) et la deuxième image (I2), pour obtenir une image améliorée,
**Caractérisé par** les faits suivants:
- il comprend un masque (304) disposé sur le chemin du faisceau à détecter (FD) ou sur le chemin du faisceau d'éclairage (FE), délimitait la zone d'éclairage ou la zone de détection, et atteint par un seul desdits faisceau à détecter (FD) et faisceau d'éclairage (FE),
- il comprend un moyen pour modifier les caractéristiques de ce masque (304) entre l'acquisition de la première image (I1) et l'acquisition de la deuxième image (I2), de manière à modifier la zone de détection en laissant inchangée la zone d'éclairage, ou de manière à modifier la zone d'éclairage en laissant inchangée la zone de détection.

2. Dispositif d'imagerie suivant la revendication 1, dans lequel le masque comprend une alternance de bandes, et dans lequel le moyen pour modifier est un moyen pour déplacer le masque suivant une direction non parallèle auxdites bandes.

3. Dispositif d'imagerie selon la revendication 1, dans lequel le masque est constitué par la superposition d'un premier réseau de disques et d'un second réseau comprenant des disques et des anneaux, et dans lequel les moyens pour modifier les caractéristiques du masque sont constitués par un moyen pour translater le second réseau par rapport au premier réseau, pour que les disques du premier réseau sélectionnent alternativement les anneaux ou les disques du second réseau.

## Claims

1. An optical microscopy system comprising:
a) a means for illuminating an illumination zone on the observed object (126), by means of an illumination beam (FE);
b) a means for selecting the light coming from a detection zone and constituting a beam to be detected (FD);
c) a means for forming in an image plane (114) an image of the observed object (126) from the beam to be detected (FD);
d) a scanning device (120) for displacing the illumination zone in order to scan the whole of the observed zone and for simultaneously displacing the image of the illumination zone in the image plane (114);
e) a sensor arranged in the image plane, for successively detecting a first image (I1) of the observed object and then a second image (I2) of the observed object;
f) a means for combining the first (I1) and the second image (I2) to obtain an improved image;
**characterized by** the following:
- it comprises a mask (304) arranged on the path of the beam to be detected (FD) or on the path of the illumination beam (FE), delimiting the illumination zone or the detection zone and reached by just one of either the beam to be detected (FD) or the illumination beam (FE);
- it comprises a means for modifying the features of this mask (304) between the acquisition of the first image (I1) and the acquisition of the second image (I2), so as to modify the detection zone while leaving the illumination zone unchanged or so as to modify the illumination zone while leaving the detection zone unchanged.

2. The imaging device according to claim 1, wherein the mask comprises an alternating arrangement of bands, and the modifying means is a means for displacing the mask in a direction that is not parallel to said bands.

3. The imaging device according to claim 1, wherein the mask is constituted by the superposition of a first array of disks and of a second array comprising disks and rings, and the means for modifying the features of the mask is constituted by a means for moving the second array in translation with respect to the first array, so that the disks of the first array alternately select the rings or the disks of the second array.

## Patentansprüche

1. Optisches Mikroskopiesystem, welches umfasst:
a) ein Mittel zur Beleuchtung einer Beleuchtungszone auf dem beobachteten Objekt (126) mit Hilfe eines Beleuchtungsstrahlenbündels (FE),
b) ein Mittel zur Selektion des von einer Erfassungszone kommenden Lichts, das ein zu erfassendes Strahlenbündel (FD) bildet,
c) ein Mittel zum Erzeugen eines Bildes des beobachteten Objekts (126) in einer Bildebene (114) mit dem zu erfassenden Strahlenbündel (FD),
d) eine Abtasteinrichtung (120) zur Verschiebung der Beleuchtungszone, um die gesamte beobachtete Zone abzutasten, und zur gleichzeitigen Verschiebung des Bildes der Beleuchtungszone in der Bildebene (114),
e) einen Sensor (114), der in der Bildebene angeordnet ist, zum aufeinanderfolgenden Erfassen eines ersten Bildes (I1) des beobachteten Objekts und sodann eines zweiten Bildes (I2) des beobachteten Objekts,
f) ein Mittel zur Kombination des ersten (I1) und des zweiten Bildes (I2), um ein verbessertes Bild zu erhalten,
**dadurch gekennzeichnet dass**:
- es eine Maske (304) umfasst, die auf dem Weg des zu erfassenden Strahlenbündels (FD) oder auf dem Weg des Beleuchtungsstrahlenbündels (FE) angeordnet ist, die die Beleuchtungszone oder die Erfassungszone abgrenzt und nur von einem Strahlenbündel, entweder dem zu erfassenden Strahlenbündel (FD) oder dem Beleuchtungsstrahlenbündel (FE), erreicht wird,
- es ein Mittel umfasst zum Modifizieren der Merkmale dieser Maske (304) zwischen der Gewinnung des ersten Bildes (I1) und der Gewinnung des zweiten Bildes (I2) derart, dass die Erfassungszone modifiziert wird, während die Beleuchtungszone unverändert bleibt, oder derart, dass die Beleuchtungszone modifiziert wird, während die Erfassungszone unverändert bleibt.

2. Abbildungs- bzw. Bildgebungsvorrichtung gemäß Anspruch 1, wobei die Maske eine alternierende Anordnung von Bändern aufweist und das Mittel zum Modifizieren ein Mittel ist zum Verschieben der Maske in einer Richtung, die zu den Bändern nicht parallel ist.

3. Abbildungs- bzw. Bildgebungsvorrichtung gemäß Anspruch 1, wobei die Maske aus der Überlagerung einer ersten Gitteranordnung von Scheiben und einer zweiten Gitteranordnung von Scheiben und Ringen besteht, und das Mittel zum Modifizieren der Merkmale der Maske aus einem Mittel zum translatorischen Bewegen der zweiten Gitteranordnung gegenüber der ersten Gitteranordnung derart, dass die Scheiben der ersten Gitteranordnung alternierend die Ringe oder die Scheiben der zweiten Gitteranordnung auswählen, besteht.
